# EUROPEAN PATENT APPLICATION

(11) **EP 3 842 978 A1**
(43) Date of publication of application: **30.06.2021**
(21) Application number: 19219655.8
(22) Date of filing: 24.12.2019
(51) Int. Cl.: G06F 21/62, G06F 21/34

(54) **CONTROLLED UNITS SECURITY SYSTEM**

(71) Applicant: Danfoss Power Solutions Inc., Ames, IA 50010 (US)
(72) Inventor: BOTANZ, Luis Alberto, 6430 Nordborg (DK); ALONSO, Sergio, 6430 Nordborg (DK); VIDAURRETA, Luis, 6430 Nordborg (DK); PÉREZ, Borja, 6430 Nordborg (DK)
(74) Representative: Stevens, Brian

(57) **Abstract**

A system (1) comprising a controlling arrangement having a controlled unit (2) and a controller (3). The problem of this invention is to increase the security of controlled units (2). Therefore the system (1) comprises identification means (7) which are at least temporarily in data transmitting connection with communication means (4) being connected to data memory means (5) which communicate with the controlling arrangement to determine a limitation of characteristics of the controlled unit (2).

## Description

The present invention relates to a system comprising a controlling arrangement having a controller and a controlled unit in particular a hydraulic unit, mobile application with hydraulic units, industrial crane etc.

Systems comprising a unit controlled by a controller, which is operated by an operator, are able to be operated by anyone regardless their skills or technical qualification. As a consequence persons who are not legitimated for operating an controlled unit might operate the controlled unit. This can cause accidents, or worse death. Therefore there is a need for a system which increases the security of controlled units.

The problem underlying this invention is to increase the security of controlled units.

This problem is solved with a system as described in the outset in that the system comprises identification means which are at least temporarily in data transmitting connection with communication means being connected to data memory means which communicate with the controlling arrangement to determine a limitation of characteristics of the controlled unit.

This system determines based on an authenticated operator and the controlled unit whether the operator is legitimated to operate the controlled unit. This prevents a misusage and increase security of the controlled unit, more specifically, in those applications where the eligibility requirements change dynamically, such as expiring trainings.

In an embodiment, the system comprises at least one point of sale and the identification means are at least temporarily in data transmitting connection with the point of sale. The at least temporarily data transmitting connection between the identification means, e.g. ID-cards, and the point of sale assures, that a holder of the identification means needs to authenticate every time the holder uses the identification means at the point of sale. An unauthorized usage of the identification means is prevented.

In an embodiment, the communication means are integrated in the controller. The integration in the controller helps to save time, since the communication means can be used right on the controller in order to authenticate as an authorized operator. Therefore, there is no need to approach another point for authentication purposes.

In an embodiment, the identification means and the communication means communicate at least temporarily contactless. Identification means, e.g. ID-cards, are kept often within wallets or on keyrings. To simplify the use of the identification means, a contactless communication permits to bring the identification means close to the communication means without taking the identification means out of wallets or keyrings.

In an embodiment, the data memory means are located external of the controller. This helps to reduce weight of the controller, since no additional data memory and its periphery needs to be integrated within the controller. Furthermore, the data memory means can be shared between multiple controllers.
In an embodiment, the controller communicates with an intermediate device communicating with the data memory means, and the data memory means communicate with the intermediate device communicating with the controlled unit, and the controlled unit communicate with the intermediate device communicating with the controller. The intermediate device can be compromised within the operating unit, which has a steady power supply. As a result, weight of the controller can be reduced, in terms of power supply, since the controller and the intermediate device communicate within a predetermined range, e.g. within sight, which requires less communication power than communicating over a longer distance, e.g. to the data memory means.

In an embodiment, the data memory means comprise at least one data base. To access information stored on the data memory means, it is useful to organize it in accordance to a system or a data base. Since information accessed by the above discussed system uses different kind of information which are stored on different data bases, the data memory means comprises at least one data base. One data base might comprise information about the identity of the owner of the identity card, another data base might comprise accessibility data of at least one controlled machine..

In an embodiment, the controller and the data memory means are connected tethered. In harsh surroundings, e.g. metal mines or induction furnaces a tethered connection ensures a highly stable connection despite electric and or electromagnetic screening.

In an embodiment, the controller and the data memory means are connected wireless. Operating units, preferably hydraulic systems, are often used outside a range of tethered connections. Therefore, wireless connections increase the flexibility and possible applications.

In an embodiment, the data memory means contain physical characteristics about the controlled unit. For legitimation and authentication purposes, at least one data memory means needs to contain physical characteristics about the controlled unit. These information can be about weight of the controlled unit, height of the controlled unit, maintenance conditions, working hours, etc. This helps to plot maintenance intervals and / or monitoring the controlled machine.

In an embodiment, the data memory means contain characteristics about an operator identified by the identification means. Characteristics about the operator identified by the identification means might contain the operator's skills or technical legitimations, a credit balance, etc. Using these information the usage of a controller and therefore a controlled unit can be permitted or prohibited.

In an embodiment, characteristics of the controlled unit are limited in accordance to physical characteristics about the controlled unit and characteristics about an operator identified by the identification means being stored in the data memory means. Using characteristics about the controlled unit and information about the identification means, features of the controlled unit can be enabled, disabled or limited. This increases the security of handling the controlled unit.

The invention will now be described in more detail with reference to the drawings, wherein:

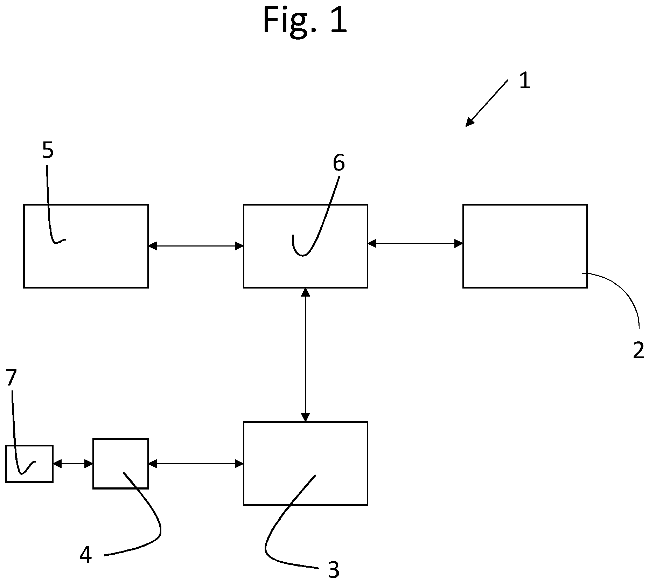

- Fig. 1: a schematic display of the system

The invention is described on basis of a daily routine of truck mounted crane operator as an example.

In a morning the operator arrives at a company's area. To access the company's area, the operator authenticates himself using his already existing identification means 7, as example an already existing ID-card. Hereinafter, identification means 7 will be referred to as ID-card. The operator uses his ID-card in combination with communication means 4, hereinafter referred to as card reader, and authenticates himself. The card reader is data transferred connected to data memory means 5, hereinafter referred to as data bases, which comprises information about the ID-card and its holder. As an optional feature, the card reader checks whether the operator is legitimated to access the company's ground and opens the gate if the operator is legitimated.

Now that the operator is on the company's ground, it is time to drink a coffee. The operator goes to a canteen, vending machine, automatic coffee maker and purchases a coffee. The operator uses his ID-card, which can be also used as a money card, to pay for the coffee. This process can be adapted to fit to snacks, food, etc. as well.

Having purchased a coffee and snacks for the day, the operator goes to a designated truck, having a controlled unit 2, in particular a hydraulic unit and a controller 3. For example the hydraulic unit can be a truck mounted hydraulic crane, hereinafter referred to as crane. The operator drives the truck to a working site, where a colleague is already waiting for the operator.

As the operator talks to a foreman planning the job, the colleague uses the controller of the truck mounted crane to get the crane ready for work. The colleague uses his ID-card to authenticate himself, by bringing his ID-card in communication with the card reader at least temporarily. The card reader, which is comprised in the controller 3, communicates with an intermediate device 6 mounted on the crane. The intermediate device 6 communicates with the data bases and the crane. The data bases contain information about technical qualifications of the colleague. Since the colleague skipped a needed training to operate the crane, the colleague is not allowed to operate the crane. Therefore, the controller 3 is disabled. A possible incident is prevented.

The operator and the foreman have planed the job and now the operator is ready to operate the crane. To do so, the operator takes the controller 3 and brings his ID-card into communication with the card reader. There is no need to approach another spot for authentication purposes. The system 1 checks via the data bases whether the operator is legitimated to operate the crane. In contrast to the colleague, the operator is legitimated to operate the crane and hence the controller 3 is enabled.

After working several hours without having a break, the system 1 notifies the operator, that the operators daily working time is exceeded. Hence the operator finishes current tasks and gets ready to leave the job site.

Limitations referring to the operator might be for example medical checkups, technical qualifications, trainings, etc. Using these factors, the system 1 can determine limitations of the crane.

As the operator is leaving the company's ground, the operator gets another snack for later, which the operator purchases by using his ID-card.

The identification means 7 and communication means 4 can be adapted according to the existing identification system the company uses. If the company for example uses RFID technology, the identification means 7 and communication means 4 are adapted to this technology. Other technologies are for example near-field-communication-technology, magnet-strip-technology, etc.

## Claims

1. A system (1) comprising a controlling arrangement having a controlled unit (2) and a controller (3), **characterized in that** the system (1) comprises identification means (7) which are at least temporarily in data transmitting connection with communication means (4) being connected to data memory means (5) which communicate with the controlling arrangement to determine a limitation of characteristics of the controlled unit (2).

2. The system (1) according to claim 1, **characterized in that** the system (1) comprises at least one point of sale and the identification means (7) are at least temporarily in data transmitting connection with the point of sale.

3. The system (1) according to claims 1 and 2, **characterized in that** the communication means (4) are integrated in the controller (3).

4. The system (1) according to claims 1 and 3, **characterized in that** the identification means (7) and the communication means (4) communicate at least temporarily contactless.

5. The system (1) according to claims 1 to 4, **characterized in that** the data memory means (5) are located external of the controller (3).

6. The system (1) according to claims 1 to 5, **characterized in that** the controller (3) communicates with an intermediate device (6) communicating with the data memory means (5), and the data memory means (5) communicate with the intermediate device (6) communicating with the controlled unit (2), and the controlled unit (2) communicate with the intermediate device (6) communicating with the controller (3).

7. The system (1) according to claims 1 to 6, **characterized in that** the data memory means (5) comprise at least one data base.

8. The system (1) according to claims 1 to 7, **characterized in that** the controller (3) and data memory means (5) are connected tethered.

9. The system (1) according to claims 1 to 7, **characterized in that** the controller (3) and data memory means (5) are connected wireless.

10. The system (1) according to claims 1 to 9, **characterized in that** the data memory means (5) contain physical characteristics about the controlled unit (2).

11. The system (1) according to claims 1 to 10, **characterized in that** the data memory means (5) contain characteristics about an operator identified by the identification means (7).

12. The system (1) according to claims 1 to 11, **characterized in that** characteristics of the controlled unit (2) are limited in accordance to physical characteristics of the operated unit and characteristics of an operator identified by the identification means (7) being stored in the data memory means (5).
